# FASCICULE DE BREVET EUROPEEN

(11) **EP 4 077 034 B1**
(45) Date de publication et mention de la délivrance du brevet: **03.01.2024**
(21) Numéro de dépôt: 20815802.2
(22) Date de dépôt: 30.11.2020
(51) Int. Cl.: B60L 53/16, B60L 55/00, B60L 58/20

(54) **VÉHICULE ÉLECTRIQUE, BORNE DE RECHARGE ET PROCÉDÉ D'ÉCHANGE D'ÉNERGIE ENTRE LE VÉHICULE ET LA BORNE**
ELEKTRISCHES FAHRZEUG, LADESTATION UND VERFAHREN ZUM AUSTAUSCH VON ENERGIE ZWISCHEN DEM FAHRZEUG UND DER STATION
ELECTRIC VEHICLE, CHARGING STATION AND METHOD OF EXCHANGING POWER BETWEEN THE VEHICLE AND THE STATION

(30) Priorité: 19.12.2019 FR 1914975
(43) Date de publication de la demande: 26.10.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: JEAN, Elise, 94230 CACHAN (FR); SZEWCZYK, Arnaud, 75015 Paris, Paris (FR)
(74) Mandataire: Renault Group
(86) Numéro de dépôt international: PCT/EP2020/083882
(87) Numéro de publication internationale: WO 2021/121923

(56) Documents cités:
- WO-A2-2013/065380
- US-A1- 2017 225 575
- US-A1- 2018 072 169

## Description

L'invention se situe dans le domaine des véhicules électriques et concerne la charge réversible de leur batterie.

Pour recharger un véhicule électrique, on connecte généralement une embase de charge présente sur le véhicule électrique à une borne de charge par l'intermédiaire d'un câble de charge. Ainsi la borne de charge transfère de l'énergie électrique d'un réseau de distribution auquel elle est connectée vers le véhicule. Ce mode de fonctionnement est appelé G2V pour son acronyme anglophone (Grid-to-Vehicle). La borne de charge comprend un convertisseur réalisant dans les cas les plus courants une conversion dite AC/DC, d'une tension alternative présente sur le réseau de distribution vers une tension continue utilisée pour recharger la batterie du véhicule.

Une utilisation réversible de la borne de charge est également possible de façon à permettre le renvoi d'énergie du véhicule vers le réseau de distribution. Ce mode de fonctionnement est appelé V2G pour son acronyme anglophone (Vehicle-to-Grid). Ainsi le véhicule électrique est utilisé comme une source d'énergie. Lors d'une demande du réseau, on commande alors la décharge de la batterie du véhicule électrique vers le réseau de distribution électrique. Pour ce faire, la borne de charge est équipée d'un convertisseur réversible réalisant soit une conversion AC/DC, comme évoquée plus haut pour recharger le véhicule, soit une conversion inverse dite DC/AC de la tension continue délivrée par la batterie du véhicule vers la tension alternative du réseau.

Une variante du mode de fonctionnement V2G peut être mise en oeuvre en l'absence de réseau pour permettre au véhicule d'alimenter des charges non raccordées à un réseau de distribution. Cette variante est appelée V2H pour son acronyme anglophone (Vehicle-to-Home). Cette variante permet de créer un réseau local formant un ilot sur lequel est raccordé un nombre limité de charges, notamment dans une utilisation domestique. Le convertisseur de la borne de charge régule la tension et la fréquence de ce réseau local contrairement au mode V2G où le réseau de distribution impose à la borne sa tension et sa fréquence.

Dans les différents modes de fonctionnement, le véhicule et la borne échangent des données de fonctionnement en complément du transfert d'énergie. Cet échange de données permet d'ajuster la tension d'entrée continue du convertisseur de la borne à la tension de la batterie du véhicule. Plus précisément, en mode V2G ou V2H, le transfert d'énergie de la batterie vers la borne n'est engagé que lorsque la différence entre la tension de la batterie du véhicule et la tension d'entrée du convertisseur de la borne est inférieure à un écart donné, généralement 20 Volts. Si cette condition n'est pas respectée, un appel de courant important peut survenir. Cet appel de courant peut endommager la batterie du véhicule.

La borne communique avec le véhicule pour échanger les données permettant l'ajustement de la tension d'entrée continue du convertisseur. A cet effet, la borne comporte un module de pilotage du convertisseur. Lorsque le réseau recharge la batterie du véhicule ou en mode V2G, la borne et son module de pilotage sont alimentés par le réseau de distribution. Un échange de donnée peut s'opérer entre le véhicule et la borne avant de lancer le transfert d'énergie. Cependant, dans le mode de fonctionnement V2H, le réseau local est généralement à l'arrêt tant que le véhicule de l'alimente pas. Le réseau local ne peut donc pas alimenter la borne et notamment son module de pilotage. En l'absence d'alimentation du module de pilotage, la communication de données entre le véhicule et la borne ne peut s'établir. Le document WO 2013/065380 A2 divulgue un tel système.

Dans certains standards, notamment le standard CHAdeMO d'origine japonaise et largement répandu en Europe, le câble reliant le véhicule et la borne prévoit des conducteurs de forte puissance permettant le transfert d'énergie et des conducteurs de faible puissance permettant une alimentation basse tension qui peut être utilisée pour alimenter le module de pilotage de la borne à partir du véhicule. En revanche, dans d'autres standards, notamment le standard combo CCS également répandu en Europe, aucune alimentation basse tension n'est prévue du véhicule vers la borne, empêchant l'alimentation du module de pilotage avant le début du transfert d'énergie du véhicule vers la borne. Le standard combo CCS (pour l'acronyme anglais Combined Charging System) a été introduit par le consortium CharIN EV, fondé par des constructeurs automobiles allemands, tels que BMW, Daimler, Opel et Volkswagen.

L'invention permet de pallier cette difficulté d'un standard sans alimentation basse tension en permettant de lancer le transfert d'énergie du véhicule vers la borne, que la borne soit alimentée en mode V2G ou non alimentée en mode V2H.

A cet effet, l'invention a pour objet un véhicule électrique destiné à échanger de l'énergie avec une borne, le véhicule comprenant un module de commande destiné à communiquer au travers d'un câble avec un module de pilotage d'un convertisseur d'énergie de la borne. Le véhicule comprend en outre une alimentation basse tension, des moyens de raccordement de l'alimentation basse tension au câble de façon à alimenter le module de pilotage de la borne, et une impédance semblable à une impédance de la borne au travers de laquelle le module de pilotage de la borne peut être alimenté par une source de tension de la borne, l'impédance du véhicule étant disposée entre le module de commande et le câble. De plus, le véhicule comprend un interrupteur permettant de court-circuiter l'impédance du véhicule. Par impédance « semblable » à une autre impédance on entend une impédance de valeur sensiblement égale à cette autre impédance, par exemple de valeur ne se différenciant pas plus de 5% de la valeur de cette autre impédance.

La présence de l'impédance du véhicule permet d'utiliser, dans un mode V2H, une borne et un câble standards prévus pour les modes de fonctionnement G2V et V2G sans modification de la borne et du câble, même si la source de tension de la borne est inactive du fait de l'absence de connexion de la borne à un réseau susceptible de l'alimenter.

Avantageusement, le véhicule comprend en outre des moyens temporaires de limitation de l'énergie transférée avec la borne.

L'invention a également pour objet une borne destinée à échanger de l'énergie avec un véhicule électrique, la borne comprenant un convertisseur d'énergie et un module de pilotage du convertisseur d'énergie, le module de pilotage étant destiné à communiquer au travers d'un câble avec un module de commande du véhicule. La borne comprend en outre des moyens pour recevoir une tension provenant d'une alimentation basse tension du véhicule au travers du câble pour alimenter le module de pilotage, et une source de tension pouvant générer des signaux à destination du module de commande du véhicule au travers d'une impédance de la borne, du câble et d'une impédance du véhicule pouvant être court-circuitée par un interrupteur du véhicule.

Avantageusement, les moyens pour recevoir une tension d'alimentation, comprennent un interrupteur permettant de déconnecter la source de tension.

L'invention a encore pour objet un procédé mettant en oeuvre un véhicule et une borne selon l'invention, destinés à échanger de l'énergie, consistant à enchainer les opérations suivantes :
- Alimentation du module de pilotage de la borne par l'alimentation basse tension du véhicule,
- Démarrage d'un échange de données au travers du câble afin de piloter le convertisseur d'énergie pour recevoir de l'énergie du véhicule,
- Transfert d'énergie du véhicule vers la borne.

Avantageusement, le transfert d'énergie du véhicule vers la borne comprend deux étapes successives :
- Etape de pré-charge à intensité limitée tant que la différence de tension entre la batterie et le convertisseur est supérieure à une valeur donnée,
- Etape de transfert d'énergie sans limitation d'intensité dès que la différence de tension entre la batterie et le convertisseur est inférieure ou égale à la valeur donnée.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente dans le cadre de l'invention, un véhicule électrique raccordé à une borne de charge ;
[Fig.2] la figure 2 représente un exemple de connecteur permettant de raccorder le véhicule et la borne de charge ;
[Fig.3] la figure 3 représente une partie de schéma électrique du véhicule et de la borne de charge ;
[Fig.4] la figure 4 représente une autre partie de schéma électrique du véhicule et de la borne de charge ;
[Fig.5] la figure 5 représente un exemple d'organigramme de fonctionnement d'un procédé de l'invention.

Par souci de clarté, les mêmes éléments porteront les mêmes repères dans les différentes figures.

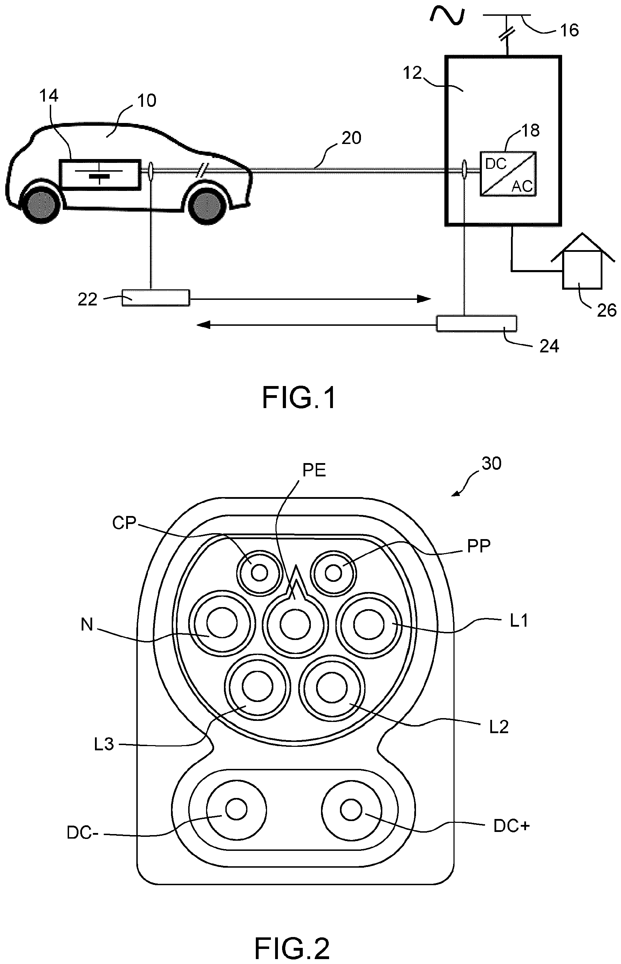

La figure 1 représente un véhicule électrique 10 raccordé à une borne de charge 12. Le véhicule 10 est équipé d'une batterie principale 14, dont la tension nominale est par exemple de 400V continu. La borne 12 permet principalement la recharge de la batterie 14. A cet effet, la borne 12 est généralement fixe et est raccordée à un réseau de distribution 16, par exemple un réseau national 220V alternatif. La borne 12 comprend un convertisseur 18 configuré pour convertir de l'énergie électrique reçue du réseau 16 en énergie électrique apte à recharger la batterie 14. Le convertisseur est par exemple un convertisseur alternatif/continu réversible ce qui permet aussi le mode V2G ou V2H.Un câble 20 relie le véhicule 10 et la borne 12. Le câble 20 permet le transfert d'énergie électrique de la borne 12 vers le véhicule 10. Le véhicule 10 comprend un module de commande 22 permettant notamment de gérer la charge de la batterie 14. Sur la figure 1, le module de commande 22 est représenté pour plus de clarté à distance du véhicule 10. La borne de charge 12 comprend un module de pilotage 24 permettant de piloter le convertisseur 18. Le module de pilotage 24 est également représenté pour plus de clarté à distance de la borne 12. Le module de commande 22 et le module de pilotage 24 échangent des informations, notamment pour adapter la tension continue du convertisseur 18 en fonction de la tension de la batterie 14. Cet échange d'information peut être réalisé de façon filaire au moyen du câble 20.

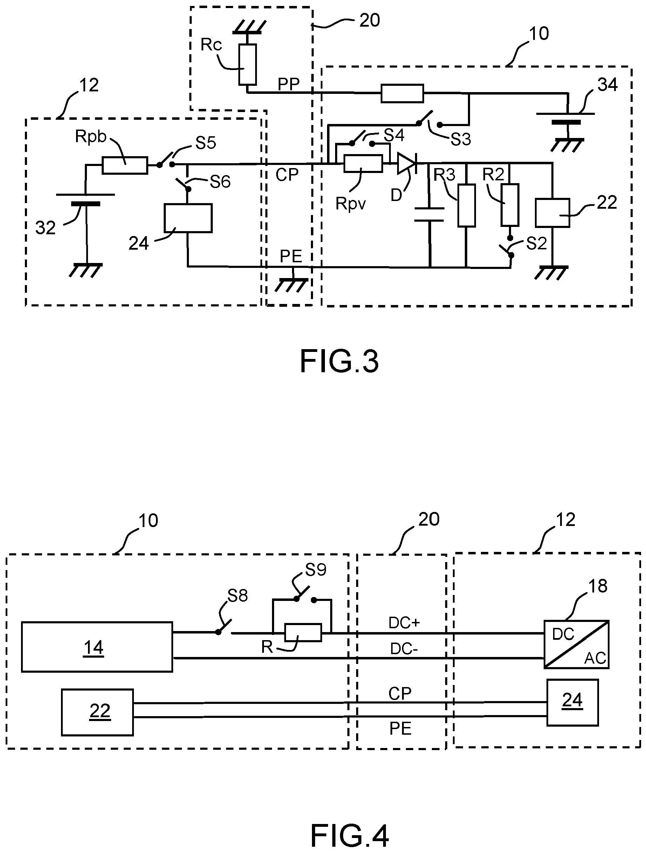

La figure 2 représente un exemple de connecteur 30 présent en extrémité du câble 20 et destiné à être raccordé à une embase du véhicule 10. La figure 2 représente la répartition des bornes du connecteur 30 utilisé dans le standard « Combo CCS ». Il est bien entendu que l'invention peut être mise en oeuvre dans d'autres standards. Le connecteur 30 comprend neuf bornes référencées L1, L2, L3, N, PE, CP, PP, DC- et DC+. Les bornes L1, L2, L3, N et PE permettent d'assurer le transfert d'énergie en courant alternatif et les bornes DC+, DC-permettent d'assurer le transfert d'énergie en courant continu. Les bornes L1, L2 et L3 correspondent aux phases électriques, la borne N au neutre électrique et la borne PE à l'équipotentiel de terre. En variante un connecteur 30 avec seulement les bornes DC-, DC+, PE, CP et PP est utilisé. Les bornes CP et PP permettent le transfert d'informations entre le module de commande 22 du véhicule 10 et le module de pilotage 24 de la borne 12. Dans le standard Combo CCS, une résistance Rc, visible sur la figure 3, est raccordée entre les bornes PP et PE et permet de détecter la présence du câble 20.

Comme évoqué plus haut, le convertisseur 18 peut être bidirectionnel et autoriser le transfert d'énergie en provenance du véhicule 10 par exemple pour renvoyer de l'énergie vers le réseau 16 en mode V2G. Dans ce mode, le module de pilotage 24 peut être alimenté par le réseau 16 et établir un dialogue avec le module de commande 22 qui, quant à lui, est alimenté par la batterie 14 du véhicule 10.

L'invention s'intéresse au cas où le réseau de distribution 16 est absent et où l'on souhaite alimenter des charges raccordées à la borne 12 à partir d'énergie prélevée dans la batterie 14 du véhicule 10. Les charges alimentées par la borne 12 peuvent former un réseau local 26 parfois appelé ilot.

La figure 3 représente en partie un exemple de schéma électrique dont les composants sont disposés dans le véhicule 10, la borne 12 et le câble 20. Pour ne pas surcharger la figure, les connexions, correspondant aux bornes DC+ et DC- permettant le transfert d'énergie en courant continu entre le véhicule 10 et la borne 12 ne sont pas représentées. Seuls les raccordements correspondant aux bornes CP, PP et PE apparaissent.

Lorsque la borne 12 recharge la batterie 14 ou en mode V2G, le module de pilotage 24 est alimentée par la borne 12. Cette alimentation peut être une alimentation dédiée ou utiliser le convertisseur 18. En mode V2H, aucune alimentation n'est disponible dans la borne 12 et le véhicule 10 s'y substitue pour alimenter le module de pilotage 24 au travers du câble 20 et, dans l'exemple représenté, par la borne CP. A cet effet, le véhicule 10 comprend une alimentation basse tension 34 et des moyens de raccordement, formés ici par un interrupteur S3, de l'alimentation basse tension 34 à la borne CP. Côté borne 12, un interrupteur S6 permet de connecter la borne CP au module de pilotage 24.

Lorsque la borne 12 est alimentée par le réseau de distribution 16, une source de tension 32 de la borne 12 est utilisée pour émettre des signaux vers la borne CP. Dans le véhicule 10, ces signaux sont transmis au module de commande 22 par l'intermédiaire d'une diode D, et d'un pont diviseur formé par des résistances R2 et R3. La résistance R2 peut être activée par l'interrupteur S2. Lorsque la borne 12 est alimentée par le réseau de distribution 16. La borne CP est directement reliée à l'anode de la diode D. Cette liaison directe peut, dans le cadre de l'invention, être ouverte. Plus précisément, un interrupteur S4 permet d'interrompre la liaison directe afin de reproduire les signaux provenant de la borne 12 et interrompus lors de l'arrêt de la source de tension 32 en mode V2H. Plus précisément, une résistance de polarisation Rpb est reliée en série entre la source de tension 32 et la borne CP. Lors de l'arrêt de la source de tension 32 en mode V2H, une autre résistance de polarisation Rpv se substitue à la résistance Rpb pour polariser le module de commande 22. La résistance Rpv est de même valeur que la résistance Rpb et est disposée dans le véhicule 10 et plus précisément entre la borne CP et le module de commande 22. La résistance Rpv est disposée en parallèle de l'interrupteur S4. Ainsi pour permettre à la résistance Rpv de participer à la polarisation du module de commande 22, il suffit d'ouvrir l'interrupteur S4. Pour ne pas perturber la polarisation du module de commande 22, lorsque la résistance Rpv est utilisée, un interrupteur S5 peut être disposé dans la borne 12 de façon à de déconnecter la résistance Rpb de la borne CP.

Par polarisation du module de commande on entend la mise sous tension du module 22 avec une tension lui permettant de détecter l'état du système. Le module 22 va en effet recevoir une tension différente en fonction de la position des différents interrupteurs et donc pourra détecter l'état du système. La commande du module 22 dépend de la tension reçue. Ici la résistance de polarisation Rpv permet au module de commande 22 de détecter, avec une modulation à 100%, le mode V2H tout en respectant le protocole du standard combo CCS.

De façon plus générale, les deux résistances Rpv et Rpb peuvent être des impédances (résistance à laquelle est ajouté une capacité et/ou une inductance en cas de besoin) remplissant une fonction semblable vis-à-vis du module de commande 22 du véhicule 10 ou du module de module de pilotage 24 en combinaison avec la source de tension 32 avec une modulation à 100% de la borne 12 pour l'impédance Rpb et en combinaison avec l'alimentation basse tension 34 du véhicule 10 pour l'impédance Rpv.

La source de tension 32 peut être une source de tension continue dont on module la largeur d'impulsion en fonction du type d'informations transmises de la borne 12 vers le module de commande 22 lorsque la borne 12 recharge la batterie 14 du véhicule 10 ou en mode V2G. En mode V2H, dans le cadre de l'invention, la borne CP est utilisée pour alimenter le module de pilotage 24. La tension délivrée par l'alimentation 34 est continue. En d'autres termes, la modulation présente sur la borne CP est à 100%. Cependant une modulation à 100% est interprétée, dans le standard Combo CCS, comme une demande d'arrêt d'urgence de la charge de la batterie 14. Le mode V2H est initié par le véhicule 10 et le module de commande 22 du véhicule est configuré pour ne pas attendre autre chose que cette modulation à 100% et pour ne pas l'interpréter comme une demande d'arrêt d'urgence. Coté borne 12, une fois le module de pilotage 24 alimenté, un dialogue peut s'établir avec le module de commande 22 du véhicule 10, le véhicule10 étant maître dans ce dialogue. Le module de commande 22 du véhicule 10 peut notamment demander à la borne 12 d'interrompre le mode V2H avec une consigne particulière différente d'une modulation à 100% de l'alimentation 34.

Une fois le dialogue établi entre le module de pilotage 24 de la borne 12 et le module de commande 22 du véhicule 10, il est possible de débuter le transfert d'énergie de la batterie 14 du véhicule 10 vers la borne 12. Ce transfert d'énergie peut être réalisé en deux étapes s'appuyant sur une structure illustrée sur la figure 4.

Sur la figure 4, à l'intérieur du véhicule 10, sont représentés la batterie 14 et le module de commande 22. A l'intérieur de la borne 12, sont représentés le convertisseur 18 et le module de pilotage 24. Le câble 20 utilise les bornes CP et PE pour le dialogue entre le module de commande 22 et le module de pilotage 24. Le transfert de puissance électrique utilise la borne DC- pour se connecter sur la borne négative de la batterie et la borne DC+ pour se connecter sur la borne positive de la batterie, dont la tension est par exemple 400V DC. Sur la figure 2, les bornes L1, L2 et L3 d'alimentation en courant alternatif sont également représentées. En effet le standard combo CCS permet une charge de la batterie 14 à partir d'une borne délivrant de l'énergie sous forme d'une tension alternative ou d'une tension continue. Lors d'un transfert d'énergie en tension continue, seules les bornes DC- et DC+ sont utilisées.

Après établissement de l'alimentation du module de pilotage 24 de la borne 12 par le véhicule 10, il est possible d'enclencher directement le transfert d'énergie de la batterie 14 vers la borne 12. A cet effet, la liaison entre la batterie 14 et le convertisseur 18 au travers de la borne DC+ comprend un contacteur S8 en série avec le conducteur transitant par la borne DC+. Le contacteur S8 est par exemple situé dans le véhicule 10 et est piloté par le module de commande 22. Cet enclenchement peut se faire sans restriction. Cependant, le réglage de la tension d'entrée du convertisseur 18 peut ne pas être optimal et générer un appel de courant important sur le conducteur transitant par la borne DC+. Cet appel de courant peut endommager la batterie 14 et le contacteur S8. Pour limiter cet appel de courant, il est avantageux de commencer par une étape de pré-charge à intensité limitée. Cette étape est par exemple réalisée au moyen d'une résistance de puissance R disposée en série avec le contacteur S8, par exemple dans le véhicule 10. A titre d'exemple, pour une batterie de 400V de tension continue, la valeur de la résistance R peut être de l'ordre de 100 Ohms. A la fermeture du contacteur S8, même si le convertisseur 18 est équivalent à un court-circuit entre les bornes DC+ et DC-, le courant est ainsi limité à 4 Ampères. La limitation du courant permet cependant au convertisseur 18 de débuter son fonctionnement, notamment en augmentant sa tension d'entrée jusqu'à atteindre une tension voisine de celle délivrée par la batterie 14. Plus précisément, l'étape de pré-charge se poursuit tant que la différence de tension entre la batterie 14 et le convertisseur 18 est supérieure à une valeur donnée. Lorsque la différence de tension devient inférieure ou égale à la valeur donnée, il est possible de se passer de la limitation en courant. A cet effet, le véhicule 10 comprend un autre contacteur S9 disposé en parallèle de la résistance R et permettant de la court-circuiter. Le contacteur S9 est piloté par le module de commande 22. Pour le pilotage du contacteur S9, le module de commande 22 échange avec le module pilotage 24 pour comparer la tension de la batterie 14 et la tension d'entrée du convertisseur 18, coté continu.

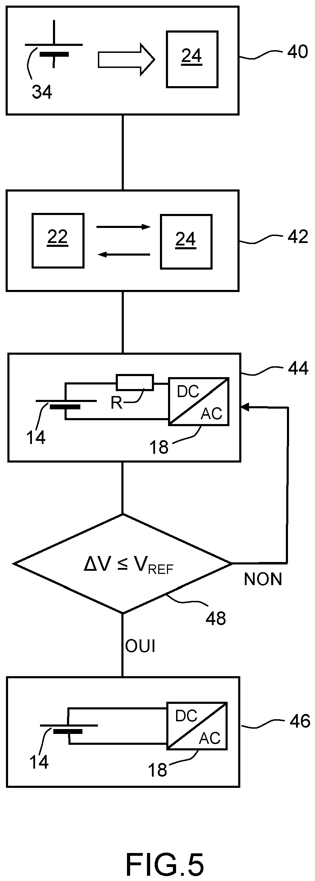

la figure 5 représente un exemple d'organigramme de fonctionnement du procédé de l'invention. Un bloc 40 représente l'alimentation du module de pilotage 24 de la borne 12 par l'alimentation 34 du véhicule 10. Une fois cette alimentation établie, un échange d'informations, représenté au bloc 42, s'établit entre le module de pilotage 24 de la borne 12 et le module de commande 22 du véhicule 10. Une fois cet échange d'information établi, le transfert d'énergie entre le véhicule 10 et la borne 12 s'établit, avantageusement d'abord sous forme limitée, comme illustré au bloc 44 puis sans limitation comme illustré au bloc 46. La fin de la limitation du transfert d'énergie sous forme limitée est conditionnée par test 48. L'échange d'information entre le module de pilotage 24 de la borne 12 et le module de commande 22 du véhicule 10 reste établi durant le transfert d'énergie représenté aux blocs 44 et 46.

## Revendications

1. Véhicule électrique destiné à échanger de l'énergie avec une borne (12), le véhicule (10) comprenant un module de commande (22) destiné à communiquer au travers d'un câble (20) avec un module de pilotage (24) d'un convertisseur d'énergie (18) de la borne (12), **caractérisé en ce que** le véhicule (10) comprend en outre une alimentation basse tension (34), des moyens de raccordement (S3) de l'alimentation basse tension (34) au câble (20) de façon à alimenter le module de pilotage (24) de la borne (12), et une impédance (Rpv) sensiblement de même valeur qu'une impédance (Rpb) de la borne (12) au travers de laquelle le module de pilotage (24) de la borne (12) peut être alimenté par une source de tension (32) de la borne (12), l'impédance (Rpv) du véhicule (10) étant disposée entre le module de commande (22) et le câble (20) et **en ce qu'**il comprend un interrupteur (S4) permettant de court-circuiter l'impédance (Rpv) du véhicule (10).

2. Borne destinée à échanger de l'énergie avec un véhicule électrique (10), la borne (12) comprenant un convertisseur d'énergie (18) et un module de pilotage (24) du convertisseur d'énergie (18), le module de pilotage (24) étant destiné à communiquer au travers d'un câble (20) avec un module de commande (22) du véhicule (10), **caractérisé en ce que** la borne (12) comprend en outre des moyens (S6) pour recevoir une tension provenant d'une alimentation basse tension (34) du véhicule (10) au travers du câble (20) pour alimenter le module de pilotage (24), et une source de tension (32) pouvant générer des signaux à destination du module de commande (22) du véhicule (10) au travers d'une impédance (Rpb) de la borne (12), du câble (20) et d'une impédance (Rpv) du véhicule (10) pouvant être court-circuitée par un interrupteur (S4) du véhicule (10).

3. Borne selon la revendication 2, **caractérisé en ce que** les moyens pour recevoir une tension d'alimentation, comprennent un interrupteur (S5) permettant de déconnecter la source de tension (32).

4. Véhicule selon la revendication 1 destiné à échanger de l'énergie avec une borne (12) selon l'une des revendications 2 ou 3, **caractérisé en ce que** le véhicule (10) comprend en outre des moyens temporaires (R, S9) de limitation de l'énergie transférée avec la borne (12).

5. Procédé mettant en oeuvre un véhicule (10) selon l'une des revendications 1 ou 4 et une borne (12) selon la revendication 2, destinés à échanger de l'énergie, **caractérisé en ce qu'**il consiste à enchainer les opérations suivantes :
- Alimentation (40) du module de pilotage (24) de la borne (12) par l'alimentation basse tension (34) du véhicule (10),
- Démarrage d'un échange de données (42) au travers du câble (20) afin de piloter le convertisseur d'énergie (18) pour recevoir de l'énergie du véhicule (10),
- Transfert d'énergie (44, 46) du véhicule (10) vers la borne (12).

6. Procédé mettant en oeuvre un véhicule (10) selon la revendication 1 dans lequel le transfert d'énergie du véhicule (10) vers la borne comprend deux étapes successives :
- Etape de pré-charge (44) à intensité limitée tant que la différence de tension entre la batterie (14) et le convertisseur (18) est supérieure à une valeur donnée,
- Etape de transfert d'énergie sans limitation d'intensité (46) dès que la différence de tension entre la batterie (14) et le convertisseur (18) est inférieure ou égale à la valeur donnée.

## Patentansprüche

1. Elektrofahrzeug, dazu bestimmt, Energie mit einer Station (12) auszutauschen, wobei das Fahrzeug (10) ein Befehlsmodul (22) enthält, das dazu bestimmt ist, über ein Kabel (20) mit einem Steuermodul (24) eines Energiewandlers (18) der Station (12) zu kommunizieren, **dadurch gekennzeichnet, dass** das Fahrzeug (10) außerdem eine Niederspannungsversorgung (34), Anschlusseinrichtungen (S3) der Niederspannungsversorgung (34) an das Kabel (20), um das Steuermodul (24) der Station (12) zu versorgen, und eine Impedanz (Rpv) enthält, die im Wesentlichen den gleichen Wert wie eine Impedanz (Rpb) der Station (12) hat, über die das Steuermodul (24) der Station (12) von einer Spannungsquelle (32) der Station (12) versorgt werden kann, wobei die Impedanz (Rpv) des Fahrzeugs (10) zwischen dem Befehlsmodul (22) und dem Kabel (20) angeordnet ist, und dass es einen Schalter (S4) enthält, der es ermöglicht, die Impedanz (Rpv) des Fahrzeugs (10) kurzzuschließen.

2. Station, dazu bestimmt, Energie mit einem Elektrofahrzeug (10) auszutauschen, wobei die Station (12) einen Energiewandler (18) und ein Steuermodul (24) des Energiewandlers (18) enthält, wobei das Steuermodul (24) dazu bestimmt ist, über ein Kabel (20) mit einem Befehlsmodul (22) des Fahrzeugs (10) zu kommunizieren, **dadurch gekennzeichnet, dass** die Station (12) außerdem Einrichtungen (S6), um eine von einer Niederspannungsversorgung (34) des Fahrzeugs (10) kommende Spannung über das Kabel (20) zu empfangen, um das Steuermodul (24) zu versorgen, und eine Spannungsquelle (32) enthält, die Signale an das Befehlsmodul (22) des Fahrzeugs (10) über eine Impedanz (Rpb) der Station (12), das Kabel (20) und eine Impedanz (Rpv) des Fahrzeugs (10) erzeugen kann, die von einem Schalter (S4) des Fahrzeugs (10) kurzgeschlossen werden kann.

3. Station nach Anspruch 2, **dadurch gekennzeichnet, dass** die Einrichtungen zum Empfang einer Versorgungsspannung einen Schalter (S5) enthalten, der es ermöglicht, die Spannungsquelle (32) abzuschalten.

4. Fahrzeug nach Anspruch 1, dazu bestimmt, Energie mit einer Station (12) nach einem der Ansprüche 2 oder 3 auszutauschen, **dadurch gekennzeichnet, dass** das Fahrzeug (10) außerdem temporäre Einrichtungen (R, S9) zur Begrenzung der mit der Station (12) übertragenen Energie enthält.

5. Verfahren, das ein Fahrzeug (10) nach einem der Ansprüche 1 oder 4 und eine Station (12) nach Anspruch 2 verwendet, die dazu bestimmt sind, Energie auszutauschen, **dadurch gekennzeichnet, dass** es darin besteht, die folgenden Vorgänge zu verknüpfen:
- Versorgung (40) des Steuermoduls (24) der Station (12) durch die Niederspannungsversorgung (34) des Fahrzeugs (10),
- Start eines Datenaustauschs (42) über das Kabel (20), um den Energiewandler (18) zu steuern, um Energie vom Fahrzeug (10) zu empfangen,
- Energietransfer (44, 46) vom Fahrzeug (10) zur Station (12).

6. Verfahren, das ein Fahrzeug (10) nach Anspruch 1 verwendet, wobei der Energietransfer vom Fahrzeug (10) zur Station zwei aufeinanderfolgende Schritte enthält:
- Vorladungsschritt (44) mit begrenzter Stromstärke, so lange der Spannungsunterschied zwischen der Batterie (14) und dem Wandler (18) höher ist als ein gegebener Wert,
- Energietransferschritt ohne Stromstärkenbegrenzung (46), sobald der Spannungsunterschied zwischen der Batterie (14) und dem Wandler (18) niedriger als der oder gleich dem gegebenen Wert ist.

## Claims

1. Electric vehicle that is intended to exchange power with a station (12), the vehicle (10) comprising a control module (22) that is intended to communicate through a cable (20) with a drive module (24) for driving a power converter (18) of the station (12), **characterized in that** the vehicle (10) further comprises a low-voltage power supply (34), connection means (S3) for connecting the low-voltage power supply (34) to the cable (20) so as to supply power to the drive module (24) of the station (12), and an impedance (Rpv) that has substantially the same value as an impedance (Rpb) of the station (12) through which the drive module (24) of the station (12) may be supplied with power by a voltage source (32) of the station (12), the impedance (Rpv) of the vehicle (10) being arranged between the control module (22) and the cable (20) and **in that** it comprises a switch (S4) that allows the impedance (Rpv) of the vehicle (10) to be short-circuited.

2. Station that is intended to exchange power with an electric vehicle (10), the station (12) comprising a power converter (18) and a drive module (24) for driving the power converter (18), the drive module (24) being intended to communicate through a cable (20) with a control module (22) of the vehicle (10), **characterized in that** the station (12) further comprises means (S6) for receiving a voltage originating from a low-voltage power supply (34) of the vehicle (10) through the cable (20) so as to supply power to the drive module (24), and a voltage source (32) that is able to generate signals intended for the control module (22) of the vehicle (10) through an impedance (Rpb) of the station (12), the cable (20) and an impedance (Rpv) of the vehicle (10) that may be short-circuited by a switch (S4) of the vehicle (10) .

3. Station according to Claim 2, **characterized in that** the means for receiving a power supply voltage comprise a switch (S5) that allows the voltage source (32) to be disconnected.

4. Vehicle according to Claim 1, which is intended to exchange power with a station (12) according to either of Claims 2 and 3, **characterized in that** the vehicle (10) further comprises temporary means (R, S9) for limiting the power that is transferred between it and the station (12).

5. Method that implements a vehicle (10) according to either of Claims 1 and 4 and a station (12) according to Claim 2, which are intended to exchange power, **characterized in that** it consists in concatenating the following operations:-supplying power (40) to the drive module (24) of the station (12) by means of the low-voltage power supply (34) of the vehicle (10),- starting a data exchange (42) through the cable (20) in order to drive the power converter (18) so as to receive power from the vehicle (10),- transferring power (44, 46) from the vehicle (10) to the station (12).

6. Method that implements a vehicle (10) according to Claim 1, wherein transferring power from the vehicle (10) to the station comprises two consecutive steps:- a step of pre-charging (44) at limited current as long as the voltage difference between the battery (14) and the converter (18) is greater than a given value,- a step of transferring power without limitations on current (46) as soon as the voltage difference between the battery (14) and the converter (18) is less than or equal to the given value.
